⑲ 〕))) Europäisches Patentamt

European Patent Office

Office européen des brevets

(11) Numéro de publication : **0 021 892**
**B1**

(12) **FASCICULE DE BREVET EUROPÉEN**

(45) Date de publication du fascicule du brevet :
20.02.85

(21) Numéro de dépôt : **80400758.1**

(22) Date de dépôt : **29.05.80**

(51) Int. Cl.⁴ : **E 06 B   9/24**

(54) **Ecran réglable et isolant.**

(30) Priorité : **27.06.79 FR 7916662**

(43) Date de publication de la demande :
**07.01.81 Bulletin 81/01**

(45) Mention de la délivrance du brevet :
**20.02.85 Bulletin 85/08**

(84) Etats contractants désignés :
**BE DE FR GB NL**

(56) Documents cités :
**DE-C- 1 158 015**

(73) Titulaire : **Mulot, Georges**
**Route du Valmartin 3, le bois des Arpents**
**F-78860 St. Nom la Breteche (FR)**
**Mulot, Suzette**
**Route du Valmartin 3, le bois des Arpents**
**F-78860 St. Nom la Breteche (FR)**

(72) Inventeur : **Mulot, Georges**
**Route du Valmartin 3, le bois des Arpents**
**F-78860 St. Nom la Breteche (FR)**
Inventeur : **Mulot, Suzette**
**Route du Valmartin 3, le bois des Arpents**
**F-78860 St. Nom la Breteche (FR)**

(74) Mandataire : **Armengaud, Alain**
**Cabinet ARMENGAUD AINE 3 Avenue Bugeaud**
**F-75116 Paris (FR)**

## Description

L'isolement des verrières des usines, des serres, des grandes baies est habituellement réglé par des procédés différents, selon que l'on désire se protéger contre un trop fort éclairement, une grande chaleur ou le froid.

Contre le trop fort éclairement, on peint les vitres, on fait ruisseler un liquide coloré ou l'on pose des écrans tels que cannis, grilles en plastique, filtres, films adhésifs, etc. Contre une trop grande chaleur ou un froid excessif, des volets, des stores, des paillis, des plaques isolantes, de la laine de verre, etc...

Le fait de devoir intervenir pour changer ces dispositifs l'un pour l'autre, rend peu pratiques ces procédés. Les vitres des usines restent peintes même en hiver. Les baies d'habitation et des bureaux sont protégées contre un éclairement intensif et des différences de température par des moyens généralement différents ou dont l'efficacité n'est bonne que pour un des modes d'isolement.

Il est aussi connu du DE-C-1 158 015 un dispositif de protection contre des rayonnements conformément au préambule de la revendication principale.

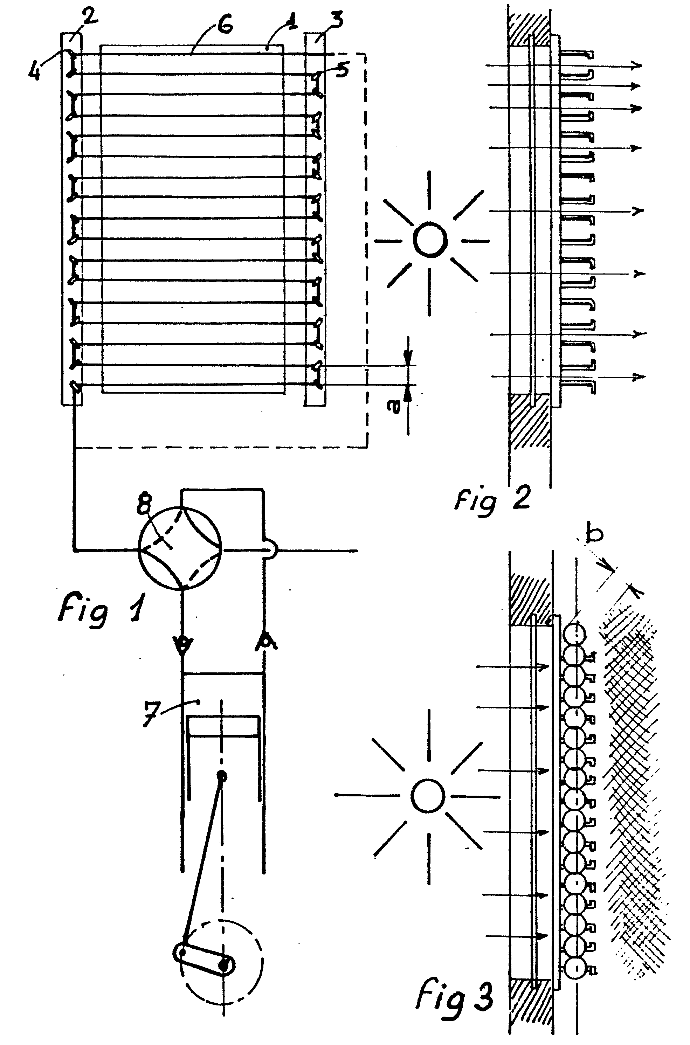

La présente invention caractérisée dans la revendication 1 a pour objet un dispositif d'isolement à plusieurs usages : il permet une régulation très progressive de l'éclairement et de l'isolation. Il est simple, fixe, peu onéreux compte tenu des économies que son usage permet et pratique voire automatique. Les figures 1 à 29 seront présentées dans l'exposé ci-dessous.

La figure 1 permet d'expliquer le principe de base : elle représente une paroi telle qu'une surface vitrée 1, par exemple rectangulaire montée sur un cadre. Deux supports 2 et 3, fixés soit en haut et en bas, soit de chaque côté et de préférence vers l'intérieur constituent l'essentiel de l'armature du dispositif.

Sur chacun de ces supports sont fixés, alignés et espacés régulièrement, des doigts (4, 5) crochus de petit diamètre formant comme une échelle. A chaque doigt 4 fixé sur le support 2 correspond un doigt 5 fixé sur le support 3.

Un tuyau souple 6, d'épaisseur très mince, et dont le diamètre est par exemple de plusieurs centimètres, est disposé de telle manière qu'il passe, alternativement d'un support à l'autre, réalisant ainsi un réseau parallèle en forme de long serpent. On voit en effet, qu'il passe pour chaque support 2 autour de deux doigts 4 avant de contourner deux autres doigts 5 du support opposé 3. Comme le tuyau 6 est très souple, il se trouve être aplati du fait de ce mode de montage d'autant mieux que ce genre de tuyau se trouve être généralement plat à cause de son mode de fabrication.

Dans ces conditions décrites ci-dessus, le réseau parallèle de ces tuyaux 6 laisse pratiquement passer la quasi-totalité des rayons lumineux (voir coupe fig. 2).

Une extrémité du tuyau 6 (ou les deux) est reliée à une pompe 7 au travers d'un distributeur 8 ou valve.

Pour simplifier la schématisation, une pompe à piston 7 et un boisseau tournant 8 ont été représentés, mais tous les types de pompes ou d'éléments distributeurs sont possibles et l'utilisation de pompes à membranes, centrifuges, à palettes ou autres est prévue, le choix dépendant des conditions d'exploitation ; de même le boisseau tournant peut être remplacé par des valves commandées électriquement ou par un autre procédé. Ces deux organes de commande peuvent être commandés par un opérateur ou automatiquement ainsi qu'on le verra plus loin.

La figure 3 montre ce qui se passe lorsque la pompe agit au maximum. La distance moyenne (a) (fig. 1) entre les doigts 4 et 5 a été choisie légèrement inférieure au diamètre (b) du tuyau 6, celui-ci étant mis au rond par gonflage à faible pression. Toutes les bandes plates deviennent, sauf aux extrémités, des cylindres jointifs et obturent l'ouverture formant écran, et bouclier isolant grâce à l'air emprisonné. Avec les tuyaux ou tubes minces une pression très faible est suffisante.

Dans la partie extrême des segments du faisceau de tuyaux, c'est-à-dire près des doigts 4, 5, des systèmes permettant une obturation plus totale, sont prévus et seront décrits plus loin.

La figure 4 montre un état intermédiaire. Les tubes sont légèrement gonflés, ce qui réduit le passage des rayons solaires.

En fait, la disposition représentée par la figure 1 est très schématique car en pratique, les tubes lorsqu'ils sont longs ne peuvent pas rester dans le même plan ainsi que représenté sur la figure 3. Lorsqu'ils sont gonflés, il se produit un effet de foisonnement, certains tubes étant poussés d'un côté et d'autres de l'autre côté du plan moyen et cela de façon anarchique (voir fig. 5).

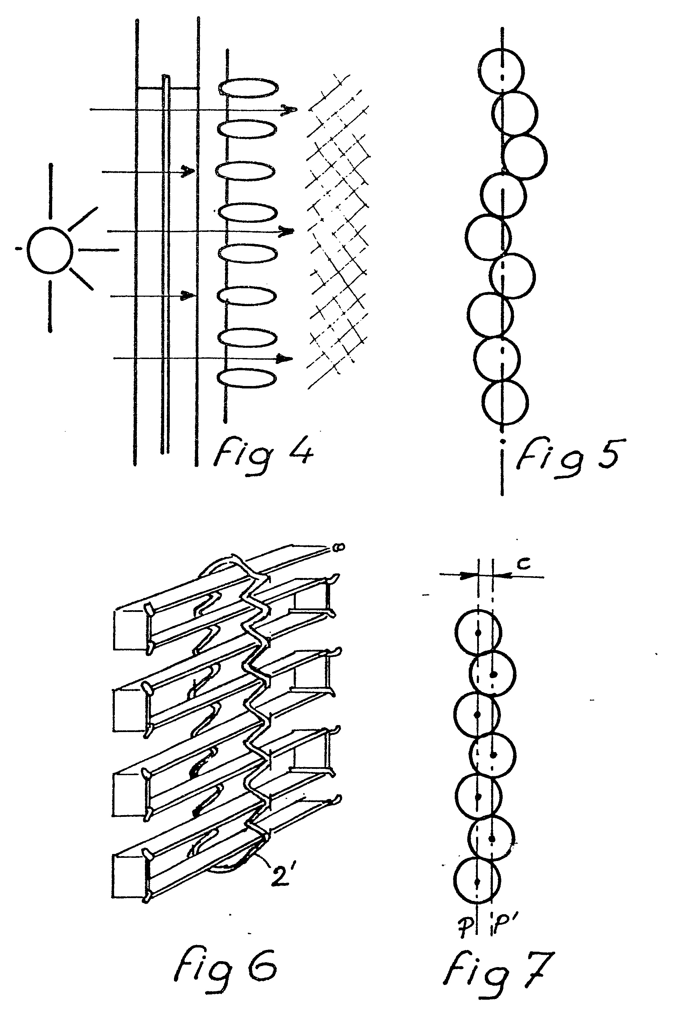

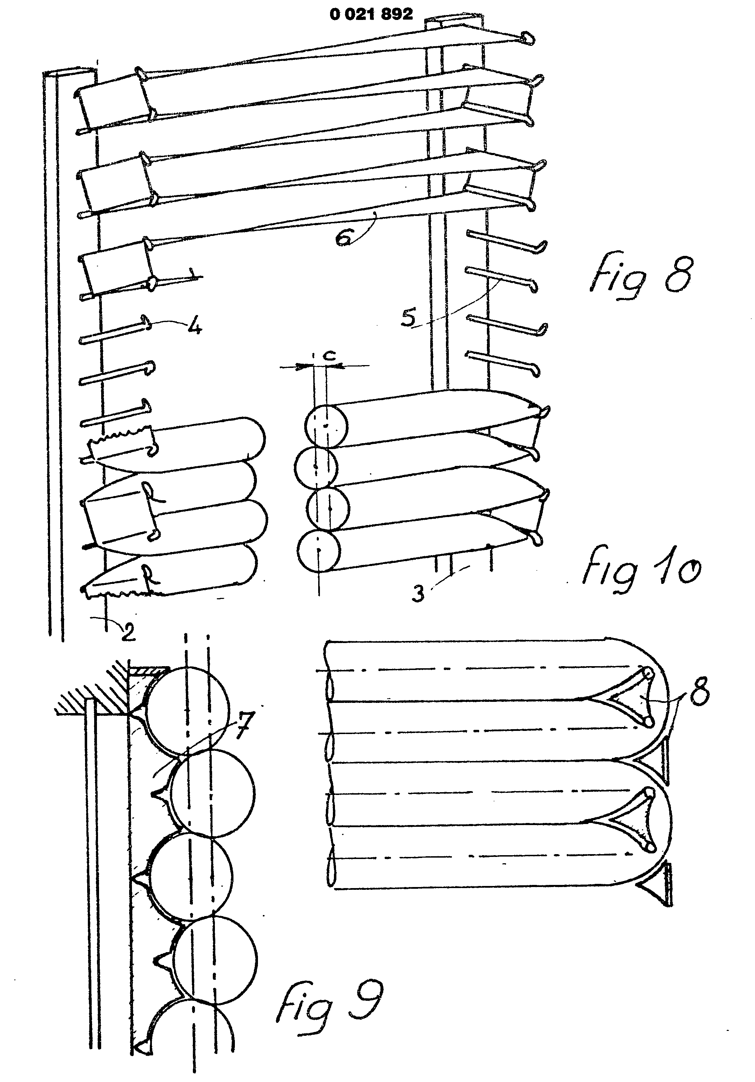

Un ou plusieurs supports additionnels 2' placés entre les supports 2 et 3 peuvent être utilisés pour maintenir les segments du tube 6 dans le même plan, mais, parmi d'autres prévues, une solution consiste à disposer les tubes 6 comme représenté par la figure 7. Les crochets 4 sont obliques par rapport au support 2 et ce dans un plan perpendiculaire au plan du réseau. Il en est de même des crochets 5 montés sur le support 3. Les crochets 4 et 5 sont inclinés en sens inverse sur les supports 2 et 3 (fig. 6 et 8 partie centrale). Ainsi supportés, les segments de tubes sont une fois sur 2 plus proches des supports, ce qui les dispose alternativement dans deux plans parallèles P et P' séparés par la distance (c). Dégonflés, (partie supérieure de la fig. 8) les segments de tubes sont légèrement vrillés, mais cela n'est pas un inconvénient majeur ; ce qui est important, c'est la suppression de l'effet de foisonnement, les tubes se trouvant être ainsi disposés de façon naturelle.

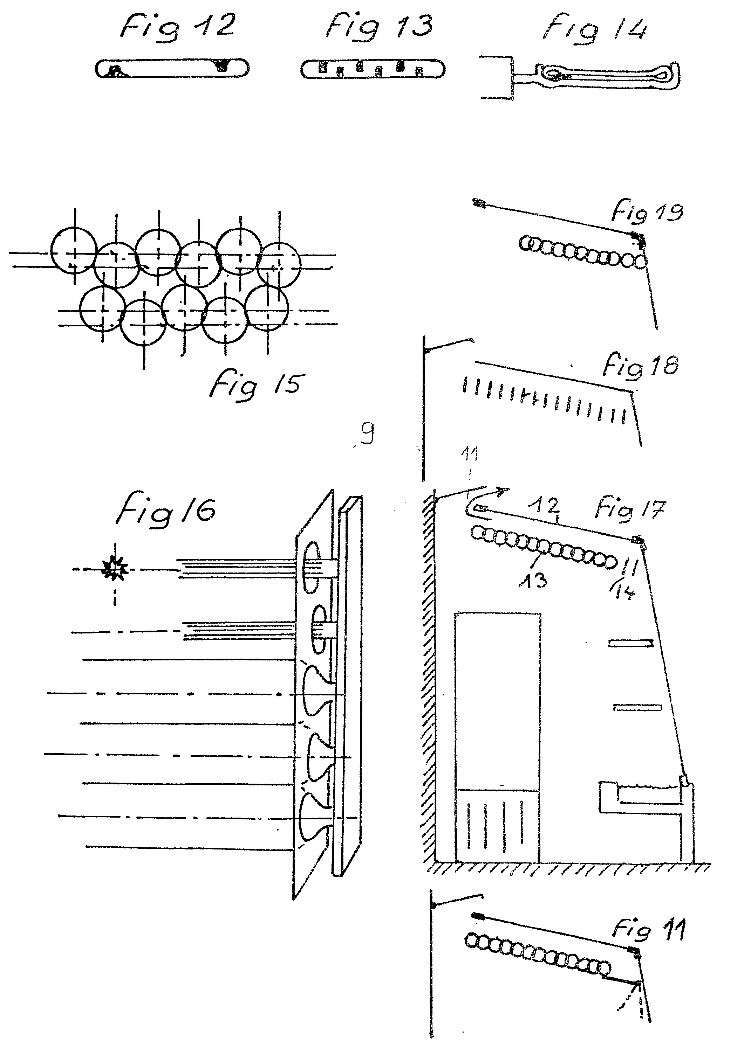

Les supports 2 et 3 exécutés comme indiqué sont suffisants si l'on désire une régulation de l'éclairement et une isolation thermique restreinte, mais lorsque l'on veut obtenir une isolation poussée, il est nécessaire de compléter l'ensemble en ajoutant des éléments de fermeture qui peuvent être, à titre d'exemple, des éléments dentelés contre lesquels les tubes viennent s'appliquer. Par exemple les creux des dents 7 peuvent être de forme circulaire lorsque cet écran est placé perpendiculairement au faisceau (fig. 9) et les dents pointues si au contraire cet élément de fermeture 8 est placé dans l'alignement du réseau (fig. 10).

Ces éléments de fermeture 8 peuvent être orientés de différentes façons, fixes ou mobiles, rigides ou souples, voire gonflables pour mieux s'adapter à la disposition des tuyaux 6 à l'ouverture et au bâtiment.

D'une façon générale, à l'endroit de son pliage autour d'un crochet 4 ou 5, le tuyau souple 6, même s'il est relativement épais s'écrase fortement dans les angles. A cet endroit, la section de passage n'est pas nulle, mais elle est pratiquement trop faible pour assurer le gonflement et le dégonflement homogène du réseau.

Une pompe à action lente favorise les opérations, mais pour permettre l'utilisation de tuyaux 6 très minces pour lesquels, à la longue, un aplatissement quasi total se produit, il est prévu des formes intérieures interdisant la fermeture complète.

A titre d'exemple, des nervures internes droites ou en spirale ont un tel effet. (Voir fig. 12 et 13).

Pour permettre l'utilisation de tuyaux 6 d'épaisseur constante on peut contraindre ceux-ci à garder une forme assurant un passage, comme par exemple, en limitant la longueur des crochets (fig. 14).

Egalement pour faciliter le passage de l'air aux endroits critiques, lors de la décompression, un élément additionnel peut être glissé à l'intérieur du tube comme par exemple une petite spirale constituée d'une bande de matériau adéquat, ou un cordon.

Les doigts 4, 5 dont la fixation est indifférente peuvent aussi être remplacés chacun par des petits rouleaux de forme judicieuse. Un gros rouleau, peut aussi remplacer deux doigts. Les rouleaux ont l'avantage de régulariser plus facilement la tension des différents éléments du faisceau.

A partir de ces éléments de base, une infinité de combinaisons sont possibles. On peut en effet faire varier :
— le cadre qui peut être fixe, orientable, amovible ou non,
— la forme du réseau (spirale par exemple),
— sa position (intérieure ou extérieure),
— son orientation dans tous les plans,
— le diamètre (b) du tuyau 6,
— la pression,
— l'inclinaison des crochets 4 et 5 sur les supports 2 et 3,
— la distance (c),

— l'épaisseur du tuyau 6,
— le matériau, qui doit de toute façon accepter le pliage, le vieillissement, les différences de températures et autres contraintes dues à son utilisation,
— la transparence ou l'opacité,
— le pouvoir filtrant,
— la couleur,
— le pouvoir réflecteur.

A un long tuyau constituant l'ensemble du réseau peuvent être préférés des segments de tuyaux connectés sur les supports 2 et 3, lesquels sont alors creux. Le passage de l'air au cours du dégonflement est de ce fait facilité.

Il est aussi également possible de choisir la forme des extrémités des segments qui peut être ronde, ovale ou très aplatie. Les embouts peuvent également être orientables, à la manière des stores vénitiens.

Les supports 2 et 3 sont normalement fixes, mais ils peuvent être mobiles afin qu'une traction puisse être exercée sur les tuyaux 6 pour assurer leur rectitude et compenser les variations thermiques si nécessaire.

Un même écran peut comprendre plusieurs couches de tuyaux dans des dispositions relatives diverses pour augmenter l'isolement (exemple fig. 15).

L'utilisation de segments de tuyaux de formes de sections différentes est prévue. Une forme étoilée, par exemple est intéressante car le diamètre, très faible à l'état dégonflé, devient très important à l'état gonflé.

De tels segments de tubes reliant deux supports creux auront de préférence des sections inégales pour des raisons évidentes de montage.

Ainsi une forme étoilée dans la partie centrale peut être à chaque extrémité terminée par une petite embouchure cylindrique.

La figure 16 montre de tels éléments dégonflés puis gonflés. On voit en particulier que la fermeture totale d'un tel réseau est particulièrement facile et complète ; il suffit de plaques 9 dans lesquelles sont faits des trous de diamètre proche du diamètre maximum.

De telles variantes peuvent être intéressantes pour de grandes installations.

Toutes ces variantes permettent un grand nombre d'applications et le choix de la meilleure solution.

A titre d'exemple :

Pour une serre, on pourra choisir un diamètre de 50 mm, une épaisseur de 0,5 avec un polychlorure de vinyle ou une épaisseur de 0,3 avec un élastomère polyester, l'opacité, la couleur blanc brillant, une distance (c) de 5 mm.

Pour un vitrage de shed d'usine, un Ø de 100 mm, une épaisseur de 0,2 à 0,5, un élastomère polyester de qualité, un gris très clair brillant car il n'est pas salissant.

Pour un capteur solaire, afin d'éviter son refroidissement quand la lumière solaire est insuffisante ou pendant la nuit, le réseau placé entre la vitre et l'échangeur ou l'extérieur peut être constitué, par exemple, de tuyaux 6 disposés en une ou plusieurs nappes, les éléments étant de préférence horizontaux pour limiter la convection interne. Le matériau, de très bonne qualité sera alors de préférence très brillant pour que, lorsque les tuyaux 6 sont vides, la lumière entrant facilement soit réfléchie au besoin vers le capteur et pour que lorsque les tuyaux 6 sont gonflés, l'isolement soit assuré par le mauvais pouvoir diffusant du matériau et la présence de l'air dans les tuyaux.

Pour un habitat, une certaine transparence, un tuyau décoratif peut être préféré.

Des combinaisons de réseaux de tuyaux 6 sont possibles.

La figure 17 en montre une application aux serres.

Par temps froid ou normalement chaud, celle-ci aérée par le bas ajouré 10 de la porte et la trappe supérieure 11 est équipée pour réguler l'isolation thermique et l'éclairement solaire par des tubes placés sous la surface vitrée supérieure 12. Dans le cas présent, à la place d'un réseau unique sont disposés deux réseaux distincts 13 et 14 qui travaillent normalement simultanément, se gonflant ou se dégonflant ensemble. Le réseau 13, dont les segments peuvent être horizontaux ou suivre la pente, est beaucoup plus grand que le réseau 14 qui ne comporte qu'un ou deux tubes placés horizontalement, à la partie basse de la surface vitrée. En cas de forte chaleur le réseau 13 est complètement gonflé et le réseau 14 dégonflé. Il s'ensuit que l'air chaud emprisonné entre la surface vitrée 12 et le réseau 13 monte de lui-même et est évacué vers l'extérieur, renouvelant ainsi par aspiration l'air de la serre. Un volet articulé peut remplacer le réseau 14 (fig. 18, 19, 11).

En ce qui concerne la commande de la pompe 7 et de la valve 8 ou de dispositifs remplaçant ces organes, la pompe 7 est commandée dès qu'il faut modifier l'état de gonflage et la valve 8 est tournée, pour obtenir le gonflage dans la position représentée (fig. 1) (traits pointillés) pour dégonfler le réseau jusqu'au résultat recherché, ou placée dans la position de fermeture.

La fin de gonflage peut être déterminée par l'obtention d'une pression définie ou par son effet sur l'éclairement et qui permet une régulation précise.

Selon les utilisations des cellules photoélectriques, des thermostats, des capteurs de son, des pressostats etc., agissant seuls ou simultanément, conjointement à un programmateur, commandant un processeur ou autre moyen cette pompe 7 et cette valve 8.

Dans sa version simple expliquée ci-avant, si les deux supports 2 et 3 peuvent faire partie d'un cadre et être de ce fait mobiles, les crochets 4 et 5 ayant une position immuable sur ces supports 2 et 3.

Il est de ce fait peu pratique d'utiliser le dispositif devant des fenêtres, des portes que l'on doit pouvoir ouvrir.

Au prix de quelques mécanismes supplémentaires il est possible de replier et ranger l'ensemble du réseau de tuyaux dans un caisson, à la manière d'un store.

Le principe général en sera expliqué à partir d'un exemple, en l'occurrence un ensemble vertical à segments horizontaux.

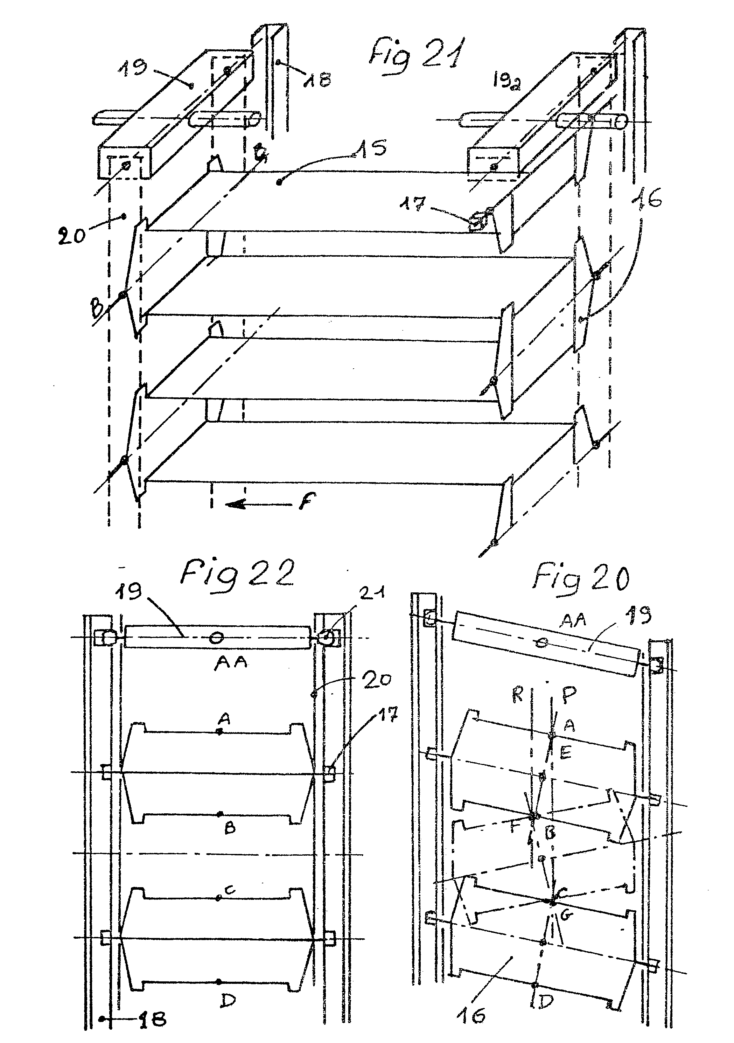

La figure 21 qui correspond à une position de transition représente une partie du réseau de tuyaux 15. Au lieu de contourner deux crochets à chaque passage, le tuyau 15 passe autour de supports plats 16 tournants autour de leurs pivots. Autour de ces axes sont montés des patins 17 coulissant dans des rails creux 18 (fig. 22).

Accrochés aux deux extrémités du palonnier de gauche 19 et celui de droite, palonniers dont les axes des pivots sont parallèles à la direction des segments, quatre bandes souples, mais très peu extensibles sont trouées à intervalles réguliers et attachées en bas aux extrémités de 2 autres palonniers qui sont articulés de la même façon sur la partie supérieure de la barre inférieure de relevage. Ces deux paires de bandes sont tendues quand la barre est en bas. L'écartement des trous dans lesquels passent les pivots des supports pivotants 17 détermine la position relative de ceux-ci. La figure 22 montre la coupe suivant f (fig. 21) correspondante, les tuyaux étant sous dépression. On retrouve les pièces citées et l'on peut voir que les têtes des vis de fixation 21 des bandes 20 sur le palonnier 19 sont logées dans deux trous des rails 18. Le but de cette liaison est démontré fig. 20. Quand le palonnier 19 est incliné autour de son axe AA comme représenté, c'est-à-dire levé de l'avant par rapport à la fig. 21, les points A, B, C, D qui sont les centres des sections de tuyaux 15 se trouvent être déplacés par l'inclinaison des supports plats 16. Les points A et C se placent dans un plan P et B et C dans un autre plan R parallèle au premier.

Ces supports plats 16, vus suivant f ont été représentés en trait fort.

Le palonnier de droite 19 étant incliné dans l'autre sens de la même valeur les points E, F, G correspondant aux milieux des sections de tuyau 15 se trouvent être respectivement confondus avec les points A, B, C (représentation en trait mixte).

Comme il en est de même pour tous les segments du réseau, les conditions d'organisation propres de ce dernier sont donc reproduites, identiques à celles de la figure 8.

Les explications suivantes sont nécessaires pour comprendre le principe choisi à titre d'exemple pour permettre le pliage de l'ensemble.

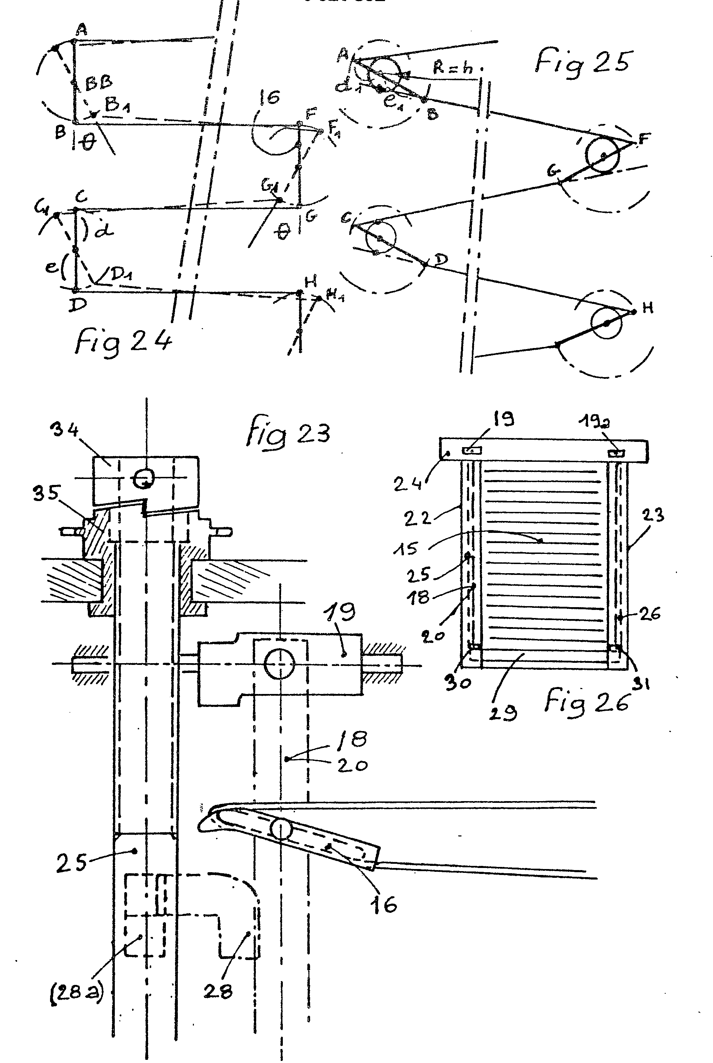

La figure 24 représente schématiquement une partie de réseau suivant fig. 21, les supports plats 16 étant symétriques par rapport à leur axe BB (on a : d = e). Dans ce cas, le réseau est alors en position d'équilibre. Si l'on force les deux rangées de supports 16 à s'incliner d'une valeur O, la première dans un sens, la seconde dans l'autre, la longueur commune des segments BF, CG, DH devient $B_1 F_1$, $C_1 G_1$, $D_1 H_1$ et augmente. L'élasticité du matériau du tuyau a donc tendance à ramener l'ensemble dans les conditions initiales.

La figure 25 représente un autre cas. Les valeurs de d et e sont différentes ; $d_1$ est plus petit que $e_1$. Dans ce cas, la position d'équilibre des supports n'est plus la même.

Sur chaque support, le couple exercé sur le bras de levier de longueur (d) est plus grand que celui exercé sur le bras de levier (e), les segments étant tous tendus également. Les supports tournent et s'arrêtent dans la position représentée telle que le rayon primitif actif (h) est le même pour les deux segments de tuyau d'un même support.

Cette position dépend du choix du rapport $e_1/d_1$ et de la distance entre les supports. La représentation déformée par nécessité de la fig. 25 donne une idée fausse de l'inclinaison. En fait, celle-ci peut être très voisine de l'horizontale.

C'est cette propriété qui est utilisée.

Les supports pivotants étant dans la position de la figure 25, la remontée de la barre inférieure mobile entraîne les uns après les autres les segments en achevant de coucher à l'horizontale les supports. Dans ces conditions, les segments sont tendus au minimum et de ce fait, le frottement des patins 17 se déplaçant dans les rails 18 est faible, ce qui est un des buts recherchés.

Le dispositif de remontée, classique, n'est pas représenté.

Par contre, un dispositif assurant la disposition des nappes de tuyaux et choisi parmi d'autres prévus est expliqué ci-dessous.

La figure 26 permet de situer les éléments, elle représente l'ensemble de l'écran qui comporte en plus du réseau de tuyau 15 un cadre fixe comprenant deux montants verticaux creux 22 et 23 solidaires d'un caisson supérieur 24. Schématisées chacune par une droite en trait long, on retrouve les deux paires de rails 18 coulissant dans les montants et entraînées respectivement par les palonniers 19 et 19a. En traits interrompus courts sont représentés l'axe des longs peignes 25 et 26 de commande de rotation des supports pivotants.

La figure 23 représente le coin supérieur gauche de l'ensemble. On retrouve, confondus, les rails 18 et les bandes 20 reliés au palonnier 19 et au support supérieur 16. On découvre la partie supérieure du peigne 25. Dans la position représentée, les dents 28 (une par support 16) sont escamotées par une rotation de 90° du peigne autour de son axe (dent cachée vue en pointillé 28a).

Cette position du peigne autorise la montée et la descente de la barre inférieure mobile 29 (fig. 26) sur laquelle sont fixés les palonniers 30 et 31 dont il a été déjà parlé. En effet les supports pivotants passent librement.

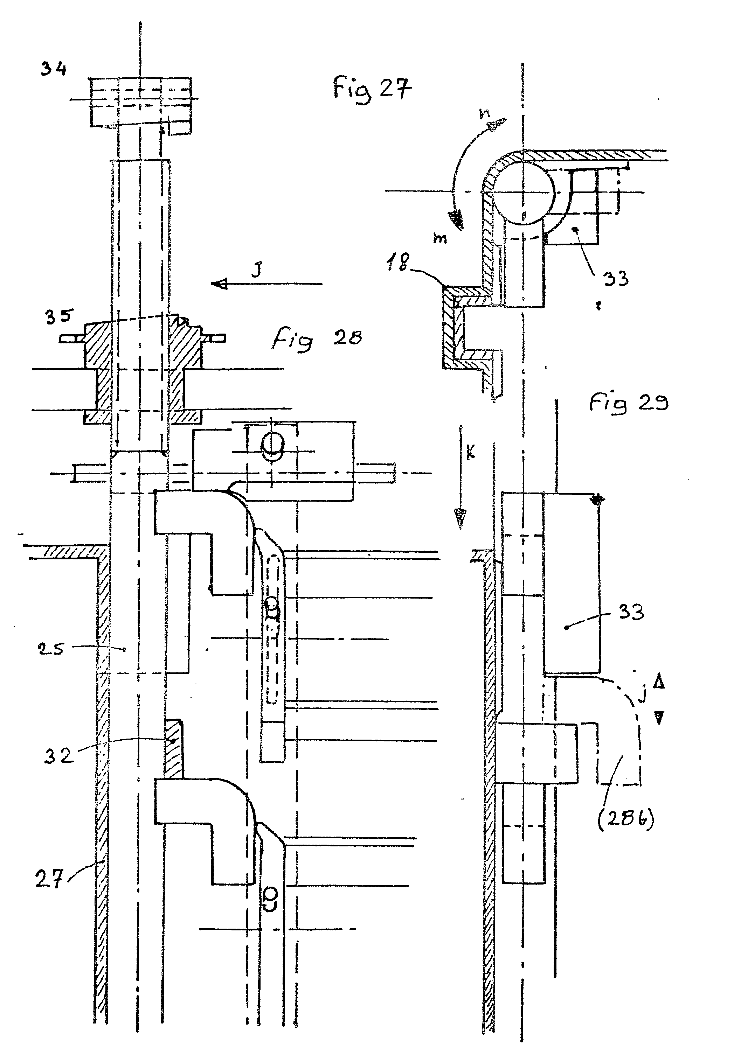

La figure 28 montre les actions combinées du peigne.

Les débattements et le rôle des peignes sont compréhensibles grâce aux figures 28 et 29 (vue suivant j) et 27 (vue suivant k). Le peigne 25 coulisse dans l'angle du montant 27 et est maintenu par quelques colliers 32 qui autorisent la rotation, rotation limitée à un quart de tour à cause des parois du montant 17 qui la limitent et qui n'est possible qu'en position basse du peigne (dent 28b en trait mixte).

En effet, le guide 33 fixé sur le montant maintient la dent 28 sauf pour la partie basse ou la distance (j) entre le guide 33 et le collier 32 est suffisante pour laisser passer la dent (position d'escamotage).

Par ailleurs une tête rapportée 35 est montée fixe sur l'extrémité du peigne 25. En dessous de cette pièce est usinée une dent de clabot ainsi que sur le dessus de la roue-écrou 34. La rotation de l'écrou 34 dans le sens (m) a pour effet de faire descendre le peigne, donc cette tête rapportée. Le filetage du peigne et l'hélice des dents de clabot ont le même sens et le même pas.

En fin de course les deux faces viennent en contact et l'écrou fait tourner le peigne et l'amène dans la position d'escamotage, sans risque de coincement.

Les commandes du peigne de gauche (représenté), placé à l'avant et celle du peigne de droite, placé à l'arrière donc dans une même position relative par rapport aux supports pivotants sont identiques et synchronisées. Bien entendu, il y a un décalage des dents d'un peigne à l'autre.

La synchronisation est assurée par des chaînes reliant les roues 35 à la commande proprement dite non figurée. A partir de cette position d'escamotage, la rotation dans le sens (n) de la roue-écrou 35 a pour effets successifs (de chaque côté de l'écran) :

1. La mise en place par rotation du peigne rappelé par un ressort (non représenté).

2. La montée du peigne qui agissant par la partie ronde des dents, fait tourner les supports pivotants 16 jusqu'au moment où les parties plates des dents assurent leur position verticale.

3. Le déplacement simultané des bandes 20 et des rails 18 ainsi que le basculement des supports 16 par la poussée exercée par la dent supérieure du peigne sur l'extrémité du palonnier correspondant. La bande 20 qui est tendue, se déplace en même temps que les rails coulissants 18 et, de ce fait, il n'y a pas de glissement relatif des patins par rapport aux rails, ce qui limite l'effort sur les patins, lequel serait considérable car la rotation des supports a eu pour effet de tendre les segments de tuyaux.

Pour préparer la remontée du réseau de tuyaux, la roue-écrou 35 tourne dans le sens (m).

1. Le peigne descend sans tourner dégageant les supports qui prennent leur position d'équilibre oblique.

2. Sur la fin de la course, le bout de la dent inférieure pousse vers le bas le palonnier 30 qui reprend la position horizontale. Tous les segments sont ainsi remis plats.

3. Arrivé à fin de course, la dent de loup de la tête rapportée 34 est entraînée par la roue-écrou 35, luttant contre le ressort de rappel. Le peigne revient en position escamotée. Il aurait pu être choisi d'autres mécanismes pour réaliser la rétraction des tuyaux et l'organisation de ceux-ci, les éléments essentiels de l'invention étant :

— les tuyaux souples,

— les supports tournants et les éléments qui en assurent les évolutions et l'ordre de celles-ci.

Pour ne pas alourdir davantage ce texte, un certain nombre de points ne sont pas décrits par le détail :

— alimentation en haut du tuyau souple,

— évolution du demi-support pivotant supérieur et du demi-support inférieur terminal qui doivent être rappelés par ressort à la position horizontale,

— blocage en position basse de la barre inférieure puis son déblocage,

— les fermetures additionnelles des extrémités de segments,

— etc...

Mais ces questions sont du domaine de la technique simple et déjà connue en soi.

La commande d'un tel store peut être manuelle, motorisée voire automatique.

Enfin, le séquencement choisi qui est préférentiel peut être modifié, les mouvements peuvent par exemple être préférés simultanément.

Le dispositif fixe, objet de l'invention peut être utilisé dans tous les cas où l'on désire placer un écran afin d'annuler ou de réduire le passage de chaleur, de bruit, d'air, de lumière, etc. Le dispositif mobile est particulièrement adapté aux portes et fenêtres.

**Revendications**

1. Dispositif fixe de régulation du passage de la lumière à travers une ouverture, pratiquée dans une enceinte et fermée par une paroi, et d'isolation thermique d'une enceinte comportant un moyen permettant d'augmenter ou de réduire progressivement la surface du passage du rayonnement au travers de l'ouverture, moyen formé par un réseau de tuyaux (6, 15) souples, parallèles les uns aux autres, placés au voisinage de l'ouverture entre la source de rayonnement et l'intérieur de l'enceinte à réguler, chauffer ou isoler, dont la section varie en fonction de la pression existant à l'intérieur des tuyaux (6, 15) ; à l'état dégonflé, les tuyaux (6, 15) offrant un passage maximum au rayonnement à travers l'ouverture, et à l'état gonflé, les tuyaux (6, 15) étant jointifs, empêchant ainsi le passage du rayonnement caractérisé en ce que le réseau est constitué de tuyaux (6, 15) à parois minces de section plate à l'état dégonflé et de section cylindrique à l'état gonflé, dont le périmètre reste sensiblement constant entre les deux états extrêmes, lesdits tuyaux (6, 15) étant tendus entre deux séries de supports situés de part et d'autre de l'ouverture, à distance de la paroi fermant l'ouverture, que ladite section plate des tuyaux (6, 15) à l'état dégonflé est disposée perpendiculairement à ladite paroi pour permettre le passage maximum du rayonnement, que lesdits tuyaux (6, 15) à l'état gonflé forment deux nappes sensiblement parallèles et régulièrement organisées, chaque tuyau (6, 15) d'une nappe étant normalement en contact de part et d'autre avec deux autres tuyaux (6, 15) de l'autre nappe selon deux génératrices obliques de telle sorte que le foisonnement soit évité.

2. Dispositif suivant la revendication 1, caractérisé par le fait que les supports sont formés par des crochets fixés à intervalle régulier et que le réseau de tuyaux disposés suivant deux nappes est constitué d'un tuyau unique de grande longueur passant alternativement d'une série de crochets à l'autre en contournant à chaque fois deux crochets consécutifs pour former des segments de tuyaux parallèles, tous les crochets de chaque série étant parallèles entre eux et placés dans un plan perpendiculaire à la paroi fermant l'ouverture et inclinés par rapport à la paroi, l'inclinaison des crochets d'une série étant en sens inverse de l'inclinaison des crochets de l'autre série, de telle sorte que les segments de tuyaux soient placés alternativement dans l'une, puis dans l'autre des deux nappes, chaque nappe maintenant l'autre.

3. Dispositif suivant la revendication 1 ou 2, caractérisé par le fait que le passage de l'air lors du gonflage et du dégonflage des tuyaux notamment aux angles de pliage, est assuré au moyen de formes inférieures nervurées interdisant l'obturation complète desdits tuyaux.

4. Dispositif suivant la revendication 3, caractérisé par le fait que la forme intérieure est un cordon placé à l'intérieur des tuyaux.

5. Dispositif suivant la revendication 3, caractérisé par le fait que le moyen assurant le passage de l'air dans les tuyaux consiste à donner aux supports une forme en U dont l'ouverture est de largeur inférieure à celle des tuyaux à l'état dégonflé et qui sont placés entre les ailes dudit U.

6. Dispositif suivant la revendication 1, caractérisé par le fait que le réseau est formé de tuyaux (15) disposés horizontalement, qu'il est escamotable dans un caisson placé à la partie supérieure de l'ouverture et que les supports (16) sont des plaques pivotantes autour d'un axe horizontal ayant deux positions principales, une de travail, une d'escamotage, la commande du pivotement des supports étant assurée par un peigne (25) qui dégage le passage pour l'ensemble du réseau dans les deux sens de son déplacement et manœuvre les supports pivotants (16) pour les placer dans la position travail ou la position escamotage et par quatre palonniers agissant sur des patins des supports pivotants (16) susceptibles de coulisser dans les rails de guidages (18) et (20) disposant les tuyaux suivant deux nappes distinctes.

**Claims**

1. A stationary device for regulating the passage of light through an opening made in the wall of a room and closed by a wall and for thermal insulation of a room, including means intended for gradually enlarging or reducing the surface allowed for the passage of radiation through the opening, said means consisting of a network of hoses (6, 15) parallel to each other which are located in the vicinity of the opening between the source of radiation and the interior of the room to be regulated, heated or insulated and the section of which varies in accordance with the inner pressure in the hoses (6, 15), said hoses (6, 15) offering in the flat state the largest surface for the passage of radiation through the opening and the same hoses (6, 15) being joined in the inflating state, thus preventing any passage of radiation, characterized in that the network consists of hoses (6, 15) with thin walls which have a flat section in the flat state and a cylindrical section in the inflating state and the perimeter of which remains constant between both extreme states, said hoses (6, 15) being stretched between two rows of supports situated on both sides of the opening at a distance from the wall closing the opening, that said flat section of the hoses (6, 15) in the flat state is disposed so as to be perpendicular to said wall in order to offer the largest surface for the passage of radiation, that said hoses (6, 15) form in the inflating state two essentially parallel and regularly arranged sheets, each hose (6, 15) of one sheet being normally in contact on both sides with two other hoses (6, 15) of the other sheet along two oblique generating lines so that overlapping is avoided.

2. A device according to claim 1, characterized in that the supports consist of hooks fixed at regular intervals and the network of hoses arranged in two sheets consists of a single hose of great length which alternately passes from one row of hooks to the other row by passing each time round two consecutive hooks so as to form parallel hose segments, all the hooks of each row being parallel to each other and arranged in a plane perpendicular to the wall closing the opening so that they are inclined with respect to the wall, the slope being in the sense opposed to the slope of the hooks of the other row, so that the hose segments belong alternately to one sheet and then to the other sheet, each sheet maintaining the other.

3. A device according to claim 1 or 2, characterized in that the passage of air when inflating or deflating the hoses, especially in folding angles, is secured by means of inner parts provided with ribs impeding the complete obturation of said hoses.

4. A device according to claim 3, characterized in that the inner part consists in a strand located inside the hoses.

5. A device according to claim 3, characterized in that the means securing the passage of air in the hoses consists in giving to the supports the form of an U the opening of which has a width inferior to that of the hoses in the flat state which are laid between the arms of said U.

6. A device according to claim 1, characterized in that the network consists of hoses (15) arranged horizontally and is retractable into a box located near the upper part of the opening and that the supports (16) are plates pivoting about an horizontal axis having two main positions, i. e. a working position and a retractable position, the control of the pivoting motion of the supports being secured by a comb (25), which makes the passage free for the whole network in both directions of its movement and operates the pivoting supports (16) so as to put them into the working position or the retractable position, and by four levers bearing on the shoes of the pivoting supports (16) which may slide in guide rails (18) and (20) so that the hoses are arranged into two separate sheets.

**Ansprüche**

1. Ortsfeste Vorrichtung zur Regelung des Lichtdurchgangs durch eine in der Wand eines Raumes ausgesparte und durch eine Wand abgeschlossene Öffnung und zur Warmeisolierung eines Raumes, die ein Mittel bietet, das es erlaubt, die für die Strahlung freigelassene Durchgangsöffnung stufenweise zu vergrössen oder zü verkleinern und das aus einem Raster von Schläuchen (6, 15) besteht, die parallel zueinander in der Nähe der Öffnung zwischen der Strahlungsquelle und dem Innern des zu regulierenden, erwärmenden oder isolierenden Raumes angeordnet sind und deren Querschnitt sich in Abhängigkeit der innerhalb der Schläuche (6, 15) herrschenden Drucks ändert, so dass die Schläuche (6, 15) im entleerten Zustand einen Maximalquerschnitt für den Strahlungsdurchgang durch die Öffnung freilassen, während dieselben Schläuche (6, 15) im aufgeblasenen Zustand aneinanderstossend jeden Durchgang der Strahlung durch die Öffnung verhindern, dadurch gekennzeichnet, dass der Raster aus dünnwandigen Schläuchen (6, 15) besteht, die im entleerten Zustand einen flachen Querschnitt und im aufgeblasenen Zustand einen Kreisrunden Querschnitt aufweisen und deren Umfang zwischen diesen beiden extremen Zustände wesentlich Konstant bleibt, wobei die Schläuche (6, 15) zwischen zwei Reihen von beiderseits der Öffnung angeordneten Halterungen und im Abstand der die Öffnung abschliessenden Wand gespannt sind und der flache Querschnitt der Schläuche (6, 15) im entleerten Zustand dieser Wand gegenüber senkrecht steht, um einen Maximaldurchgang für die Strahlung freizulassen, während die Schläuche (6, 15) im aufgeblasenen Zustand zwei im wesentlichen zueinander parallele und regelmässig angeordnete Schichten bilden, so dass jeder Schlauch (6, 15) der einen Schicht normalerweise beiderseits an zwei weitere Schläuche (6, 15) der zweiten Schlicht an zwei schräg verlaufenden Linien entlang anliegt, so dass jedes Übergreifen vermieden wird.

2. Vorrichtung nach Anspruch 1, dadurch gekennzeichnet, dass die Halterungen durch regelmässig voneinander abstehend befestigte Haken gebildet sind und der aus in zwei Schichten angeordneten Schläuchen bestehende Raster durch einen einzigen Schlauch grosser Länge gebildet wird, der abwechselnd von einer zur anderen Hakenreihe übergeht, indem er jedesmal um zwei aufeinander folgende Haken geführt wird, so dass parallele Schlauch-Abschnitte gebildet werden, wobei alle Haken jeder Reike parallel zueinander sind und in einer Ebene liegen, die senkrecht zur der die Öffnung abschliessenden Wand steht, und in Bezug auf die Wand schräg gerichtet sind, wobei die Neigung der Haken der einen Reihe der Neigung der Haken der zweiten Reihe entgegengesetzt ist, so dass die Schlauch Abschnitte abwechselnd in der einen oder in der anderen Schicht liegen, wobei jede Schicht die andere festhält.

3. Vorrichtung nach Anspruch 1 oder 2, dadurch gekennzeichnet, dass der Durchgang der Luft bei dem Aufpumpen und bei der Entleerung der Schläuche, insbesondere in den Faltenwinkeln, durch im Innern gelegene, mit Rippen versehene Teile gesichert wird, die eine völlige Verschliessung der Schläuche verhindert.

4. Vorrichtung nach Anspruch 3, dadurch gekennzeichnet, dass der im Innern gelegene Teil durch eine im Innern der Schläuche gelegene Schnur gebildet ist.

5. Vorrichtung nach Anspruch 3, dadurch gekennzeichnet, dass das Mittel, das den Durchgang der Luft in den Schläuchen gewährleistet, darin besteht, U-förmige Halterungen zu benutzen, die eine engere Öffnung als diejenige der entleerten Schläuche aufweisen und zwischen den Schenkeln der U-förmigen Halterung angeordnet sind.

6. Vorrichtung nach Anschluss 1, dadurch gekennzeichnet, dass der Raster durch waagerecht angeordnete Schläuche (15) gebildet ist, dass er in einen im oberen Bereich der Öffnung angeordneten Kasten versenkbar ist und dass die Halterungen (16) aus Platten bestehen, die drehbar um eine waagerechte Achse gelagert sind mit zwei Hauptstellungen, d. h. einer Arbeitsstellung und einer Versenkstellung, wobei die Drehbewegung der Halterungen durch einen Kamm (25), der den Durchgang für den ganzen Raster in beiden Richtungen seiner Bewegung freigibt und auf die drehbaren Halterungen (16) wirkt, um sie in die Arbeitsstellung oder in die Versenkstellung zu versetzen, sowie durch vier Hebel herbeigeführt wird, die auf die Füsse der drehbaren Halterungen (16) wirken, die in den Führungsschienen (18) und (20) gleiten können, so dass die Schläuche in zwei getrennte Schichten verteilt werden.

Fig 1

Fig 2

Fig 3

Fig 4

Fig 5

fig 6

2'

fig 7

c

P P'

fig 8

fig 10

fig 9

Fig 12

Fig 13

Fig 14

Fig 19

Fig 15

9

Fig 18

11

Fig 16

12

Fig 17

13

11

14

Fig 11

Fig 21

Fig 22

Fig 20

Fig 24

Fig 25

Fig 23

Fig 26

Fig 27

Fig 28

Fig 29